# EUROPEAN PATENT APPLICATION

(11) **EP 4 604 449 A1**
(43) Date of publication of application: **20.08.2025**
(21) Application number: 23881229.1
(22) Date of filing: 06.06.2023
(51) Int. Cl.: H04L 9/40, H04L 12/46, H04L 45/74

(54) **PROCESSING METHOD FOR DATA PACKET, AND RELATED APPARATUS**

(30) Priority: 27.10.2022 CN 202211330218; 16.02.2023 CN 202310125731
(71) Applicant: Huawei Cloud Computing Technologies Co., Ltd., Guiyang, Guizhou 550025 (CN)
(72) Inventor: SUN, Yingkong, Guiyang, Guizhou 550025 (CN)
(74) Representative: Isarpatent
(86) International application number: PCT/CN2023/098501
(87) International publication number: WO 2024/087638

(57) **Abstract**

This application discloses a data packet processing method, and relates to the field of network security technologies. The method includes: When a destination address of a first data packet points to a first object, after writing identification information into a DSCP field of the first data packet, a first device sends the first data packet, where the first device is a device that generates the first data packet, or a switch connected to the device that generates the first data packet. After obtaining the first data packet, a second device allows or forbids, based on the identification information in the DSCP field of the first data packet, access behavior corresponding to the first data packet, where the second device is a server to which the destination address of the first data packet points, or a security device that manages the server. Because a value of the DSCP field generally does not change in a transmission process of a data packet, the second device can obtain real identification information from the DSCP field, and can accurately make a decision of allowing or forbidding access behavior corresponding to the data packet, to improve network security.

## Description

This application claims priority to Chinese Patent Application No. 202211330218.4, filed with the China National Intellectual Property Administration on October 27, 2022 and entitled "FOUR-LAYER ISOLATION METHOD FOR RESOLVING ADDRESS OVERLAPPING BY COLORING DSCP IN MULTI-TENANT VIRTUAL NETWORK, AND DEVICE", and claims priority to Chinese Patent Application No. CN202310125731.8, filed with the China National Intellectual Property Administration on February 16, 2023 and entitled "DATA PACKET PROCESSING METHOD AND RELATED APPARATUS", which are incorporated herein by reference in their entireties.

### TECHNICAL FIELD

This application relates to the field of network security technologies, and in particular, to a data packet processing method and a related apparatus.

### BACKGROUND

In recent years, network security issues have become increasingly prominent. To ensure network security, security devices (such as firewalls) are deployed to prevent external attacks. A network administrator usually deploys a security policy in a security device in a network based on an internet protocol (internet protocol, IP) quintuple, so that the security device in the network identifies, based on an IP address carried in a data packet, a data packet that needs to be forbidden or allowed to pass.

However, a source IP address and/or a destination IP address in the data packet may be translated in a transmission path of the data packet. For example, if a device in the network uses a virtualization technology, when sending a data packet to another device, the device translates a real source IP address of the data packet into an agent IP address by using a hypervisor (hypervisor) layer. Therefore, when transmission of the data packet is performed in the network, the security device in the network cannot obtain the real source IP address of the data packet, and consequently, cannot match the security policy based on the real source IP address. As a result, the security policy deployed on the security device becomes invalid, and the security device cannot accurately make a decision of allowing or forbidding access behavior corresponding to the data packet.

### SUMMARY

This application provides a data packet processing method and a related apparatus, and additionally introduces an operation of writing first identification information into a DSCP field of a data packet. Because a value of the DSCP field of the data packet generally does not change in a transmission process of the data packet, all devices in a network can obtain real first identification information from the DSCP field, and can accurately make, by using the first identification information, a decision of allowing or forbidding access behavior corresponding to the data packet, to improve network security.

A first aspect of this application provides a data packet processing method. The method may be applied to the field of network security technologies. The method may include: When a destination address of a first data packet points to a first object, a first device writes identification information into a differentiated services code point DSCP field of the first data packet, where the first device is a device that generates the first data packet, or the first device is a switch connected to the device that generates the first data packet. The first device sends the first data packet, and correspondingly, a second device obtains the first data packet, where the second device is a server to which the destination address of the first data packet points, or the second device is a security device that manages the server, and the server to which the destination address of the first data packet points corresponds to the first object. The second device obtains the identification information from the DSCP field of the first data packet, and allows or forbids, based on the identification information, access behavior corresponding to the first data packet.

For example, the first object may include any one of the following: a service of one type, a name of one network area, a user of one type, an object of another type, or the like. For example, an internet user is allowed to access a web service in a network. In this case, the first object includes a service of one type (that is, the web service). For another example, an office campus is forbidden to access a data center in a network. In this case, the first object includes a name of another network area (that is, the data center) and the like.

For example, when the first object is a service 1 (that is, an example of a service of one type), both that "the destination address of the first data packet points to the first object" and that "the server to which the destination address of the first data packet points corresponds to the first object" may be understood as that the server located at the destination address can provide the service 1. Alternatively, when the first object is a network area 1 (that is, an example of a name of one network area), that "the destination address of the first data packet points to the first object" may be understood as that the destination address is included in an address range covered by the network area 1, and that "the server to which the destination address of the first data packet points corresponds to the first object" may be understood as that the server located at the destination address belongs to the network area 1. Alternatively, when the first object is a user of a type 1, that "the destination address of the first data packet points to the first object" may be understood as that an address range occupied by the user of the type 1 includes the destination address, and that "the server to which the destination address of the first data packet points corresponds to the first object" may be understood as that the server located at the destination address is used by the user of the type 1.

In this implementation, an operation of writing first identification information into a DSCP field of a data packet is additionally introduced. Because a value of the DSCP field of the data packet generally does not change in a transmission process of the data packet, all devices in the network can obtain real first identification information from the DSCP field, and can accurately make, by using the first identification information, a decision of allowing or forbidding access behavior corresponding to the data packet, to improve network security. The DSCP field is a field that already exists in the data packet, identification information is chosen to be written into the DSCP field, and a great change does not need to be made in a conventional technology. This helps reduce computer resources consumed for implementing this solution. In addition, various devices in the network have a capability of interpreting control information of the data packet, and can obtain the identification information from the DSCP field of the data packet without upgrading the capability of the device in the network, to perform this solution, so as to further reduce the computer resources consumed for implementing this solution.

When generating the first data packet, the device needs to write data into control information of the first data packet, and the device that generates the first data packet performs the operation of "writing the first identification information into the DSCP field", to improve convenience of this solution. The switch connected to the device that generates the first data packet is generally connected to a plurality of devices that generate the first data packet, and the switch performs the operation of "writing the first identification information into the DSCP field". In comparison with a case of sending a first rule to the plurality of devices that generate the first data packet, in this case, the first rule needs to be sent to only one switch, to reduce computer resources consumed in a step of "sending the first rule to the first device".

Only when the destination address of the first data packet is reached, can it be determined, based on information carried in the DSCP field of the first data packet, whether to allow performing the access behavior corresponding to the first data packet, to avoid processing the data packet based on a case in which the destination address does not point to a value of a DSCP field in a data packet of the first object. This helps further improve accuracy of a processing result of access behavior corresponding to a data packet. When the first data packet arrives at a security device connected to the server to which the destination address of the first data packet points, it is determined, based on the information carried in the DSCP field of the first data packet, whether to allow performing the access behavior corresponding to the first data packet. In other words, an independent security device performs an operation of allowing or forbidding the first data packet to pass, to reduce burdens of the server to which the destination address of the first data packet points, and improve security of the server to which the destination address of the first data packet points. In addition, generally, one security device is configured to: manage and control whether a data packet is allowed to enter a plurality of devices, and a second rule is deployed on the security device, to help reduce computer resources consumed in a process of "deploying the second rule".

In an implementation, the DSCP field of the first data packet has eight bits, and the eight bits may include a 0^{th} bit to a 7^{th} bit. Optionally, the first device may use six bits in the eight bits to perform a filling operation of first identification information. For example, the first identification information may occupy any one or more bits in the 0^{th} bit to the 5^{th} bit of the DSCP field.

In an implementation, that a first device writes identification information into a DSCP field of the first data packet includes: The first device writes the identification information into the DSCP field of the first data packet by using a hypervisor layer.

In this implementation, in comparison with a virtual machine, a container, or the like in the first device, the hypervisor layer in the first device needs a higher management right. Correspondingly, a probability that the hypervisor layer in the first device is successfully attacked by a hacker is lower, in other words, security of the hypervisor layer in the first device is higher. Performing a write operation of first identification information by using the hypervisor layer in the first device helps improve security of the foregoing operation, in other words, reduce a probability that an invalid data packet carries the first identification information, to reduce a probability that the invalid data packet successfully accesses the second device. This helps improve network security.

In an implementation, that a first device writes identification information into a DSCP field of the first data packet includes: A first instance in the first device writes first sub-identification information into a first field in the DSCP field, where the first instance is an instance corresponding to a second object. For example, the instance may be specifically represented as a virtual machine, a container, or another form. The hypervisor layer in the first device writes second sub-identification information into a second field in the DSCP field, where the identification information includes the first sub-identification information and the second sub-identification information. For example, the first field and the second field may be different bits in the DSCP field.

Optionally, if whether the second object is allowed to access the first object has been determined in the network, the first instance may be an instance that corresponds to the second object and that is in a plurality of instances deployed in the first device. For example, when the second object is a service 2 (that is, an example of a service of one type), that "the first instance corresponds to the second object" may be understood as that the first instance is an instance that is in the first device and that is configured to provide the service 2. Alternatively, when the second object is a user of a type 2, that "the first instance corresponds to the second object" may be understood as that the first instance in the first device is used by the user of the type 2. Alternatively, when the second object is a network area 2 (that is, an example of a name of one network area), that "the first instance corresponds to the second object" may be understood as that an address of the first instance is included in an address range covered by the network area 2.

In this implementation, because the plurality of instances may be deployed in the first device, and different instances may correspond to different objects, for example, different instances in the first device are configured to provide services of different types, or different instances in the first device are occupied by users of different types, the first instance and the hypervisor layer in the first device jointly perform a write operation of first identification information, so that "the write operation of the first identification information" can be managed from a more fine-grained perspective, to avoid a case in which a data packet sent by an instance that is in the first device and that corresponds to another object also carries the first identification information, so as to further reduce a probability that an invalid data packet successfully accesses the second device, and further improve network security.

In an implementation, that a first device writes identification information into a DSCP field of the first data packet includes: The first device writes the first identification information into the DSCP field of the first data packet by using an instance. For example, in an implementation, each instance in the first device may write the first identification information into the DSCP field of the first data packet. In another implementation, the first instance in the first device may write the first identification information into the DSCP field of the first data packet, where the first instance is an instance that corresponds to the second object and that is in a plurality of instances deployed in the first device.

In this implementation, another implementation solution of writing the first identification information into the DSCP field of the first data packet is provided, to improve implementation flexibility of this solution. If only the first instance writes the first identification information into the DSCP field of the first data packet, a case in which a data packet sent by an instance that is in the first device and that corresponds to another object also carries the first identification information can be avoided, to further reduce a probability that an invalid data packet successfully accesses the second device, and further improve network security.

In an implementation, before the first device writes the identification information into the DSCP field of the first data packet, the method further includes: The first device receives a first rule sent by a third device, where the first rule indicates to write, when a destination address of a sent data packet points to the first object, the identification information into a DSCP field of the sent data packet. Before the second device allows or forbids, based on the identification information, the access behavior corresponding to the first data packet, the method further includes: The second device receives a second rule sent by the third device, where the second rule indicates to allow or forbid, when a DSCP field of a data packet obtained by the second device carries the identification information, access behavior corresponding to the obtained data packet.

In this implementation, the third device separately sends the first rule and the second rule to the first device and the second device. To be specific, this helps implement that another control device delivers rules to a plurality of devices in the network in a unified manner, and helps avoid a conflict between rules in different devices in the network, to further improve network security.

A second aspect of this application provides a data packet processing method. The method may be applied to the field of network security technologies. The method includes: When a destination address of a first data packet points to a first object, a first device writes identification information into a differentiated services code point DSCP field of the first data packet, where the identification information indicates a second device to allow or forbid access behavior corresponding to the first data packet. The first device sends the first data packet. The first device is a device that generates the first data packet, or the first device is a switch connected to the device that generates the first data packet. The second device is a server to which the destination address of the first data packet points, or the second device is a security device that manages the server, and the server corresponds to the first object.

In the second aspect, the first device may further perform the steps performed by the first device in the first aspect. For meanings of nouns in the second aspect and the possible implementations of the second aspect and beneficial effects brought by the second aspect and the possible implementations of the second aspect, refer to the descriptions in the first aspect and the possible implementations of the first aspect. Details are not described herein.

A third aspect of this application provides a data packet processing method. The method may be applied to the field of network security technologies. The method includes: A second device obtains a first data packet, where the second device is a server to which a destination address of the first data packet points, or the second device is a security device that manages the server. The second device obtains identification information from a differentiated services code point DSCP field of the first data packet. The second device allows or forbids, based on the identification information, access behavior corresponding to the first data packet.

In the third aspect, the second device may further perform the steps performed by the second device in the first aspect. For meanings of nouns in the third aspect and the possible implementations of the third aspect and beneficial effects brought by the third aspect and the possible implementations of the third aspect, refer to the descriptions in the first aspect and the possible implementations of the first aspect. Details are not described herein.

A fourth aspect of this application provides a data packet processing method. The method may be applied to the field of network security technologies. The method includes: A third device sends a first rule to a first device in a network, where the first rule indicates to write, when a destination address of a sent data packet points to a first object, identification information into a differentiated services code point DSCP field of the sent data packet. The third device sends a second rule to a second device corresponding to the first object in the network, where the second rule indicates to allow or forbid, when a DSCP field of an obtained data packet carries the identification information, access behavior corresponding to the obtained data packet.

In an implementation, that a third device sends a first rule to a first device in a network includes: The third device sends the first rule to a hypervisor layer in the first device.

For meanings of nouns in the fourth aspect and the possible implementations of the fourth aspect and beneficial effects brought by the third aspect and the possible implementations of the third aspect, refer to the descriptions in the first aspect and the possible implementations of the first aspect. Details are not described herein.

A fifth aspect of this application provides a data packet processing system. The system may be applied to the field of network security technologies. The data packet processing system includes a filling module in a first device and a sending module in the first device, and the data packet processing system further includes an obtaining module in a second device and a processing module in the second device. The filling module is configured to: when a destination address of a first data packet points to a first object, write identification information into a differentiated services code point DSCP field of the first data packet, where the first device is a device that generates the first data packet, or the first device is a switch connected to the device that generates the first data packet. The sending module is configured to send the first data packet. The obtaining module is configured to obtain the first data packet, where the second device is a server to which the destination address of the first data packet points, or the second device is a security device that manages the server, and the server corresponds to the first object. The obtaining module is further configured to obtain the identification information from the DSCP field of the first data packet. The processing module is configured to: allow or forbid, based on the identification information, access behavior corresponding to the first data packet.

In the fifth aspect, each module in the data packet processing system may further perform the steps performed by the first device and the second device in the first aspect. For meanings of nouns in the fifth aspect and the possible implementations of the fifth aspect and beneficial effects brought by the fifth aspect and the possible implementations of the fifth aspect, refer to the descriptions in the first aspect and the possible implementations of the first aspect. Details are not described herein.

A sixth aspect of this application provides a data packet processing apparatus. The apparatus may be used in the field of network security technologies. The data packet processing apparatus is used in a first device. The apparatus includes: a filling module, configured to: when a destination address of a first data packet points to a first object, write identification information into a differentiated services code point DSCP field of the first data packet, where the identification information indicates a second device to allow or forbid access behavior corresponding to the first data packet; and a sending module, configured to send the first data packet. The first device is a device that generates the first data packet, or the first device is a switch connected to the device that generates the first data packet. The second device is a server to which the destination address of the first data packet points, or the second device is a security device that manages the server, and the server corresponds to the first object.

In the sixth aspect, each module in the data packet processing system may further perform the steps performed by the first device in the first aspect. For meanings of nouns in the sixth aspect and the possible implementations of the sixth aspect and beneficial effects brought by the sixth aspect and the possible implementations of the sixth aspect, refer to the descriptions in the first aspect and the possible implementations of the first aspect. Details are not described herein.

A seventh aspect of this application provides a data packet processing apparatus. The apparatus may be used in the field of network security technologies. The data packet processing apparatus is used in a second device. The apparatus includes: an obtaining module, configured to obtain a first data packet, where the second device is a server to which a destination address of the first data packet points, or the second device is a security device that manages the server, where the obtaining module is further configured to obtain identification information from a differentiated services code point DSCP field of the first data packet; and a processing module, configured to: allow or forbid, based on the identification information, access behavior corresponding to the first data packet.

In the seventh aspect, each module in the data packet processing system may further perform the steps performed by the second device in the first aspect. For meanings of nouns in the seventh aspect and the possible implementations of the seventh aspect and beneficial effects brought by the seventh aspect and the possible implementations of the seventh aspect, refer to the descriptions in the first aspect and the possible implementations of the first aspect. Details are not described herein.

An eighth aspect of this application provides a data packet processing apparatus. The apparatus may be used in the field of network security technologies. The data packet processing apparatus is used in a third device. The data packet processing apparatus includes: a sending module, configured to send a first rule to a first device in a network, where the first rule indicates to write, when a destination address of a data packet sent by the first device points to a first object, identification information into a differentiated services code point DSCP field of the sent data packet. The first device is a device that generates a first data packet, or the first device is a switch connected to the device that generates the first data packet. The sending module is further configured to send a second rule to a second device in the network, where the second rule indicates to allow or forbid, when a DSCP field of an obtained data packet carries the identification information, access behavior corresponding to the obtained data packet. The second device is a server to which a destination address of the first data packet points, or the second device is a security device that manages the server, and the server corresponds to the first object.

In the eighth aspect, the data packet processing apparatus may further perform the steps performed by the third device in the third aspect. For meanings of nouns in the eighth aspect and the possible implementations of the eighth aspect and beneficial effects brought by the eighth aspect and the possible implementations of the eighth aspect, refer to the descriptions in the third aspect and the possible implementations of the third aspect. Details are not described herein.

A ninth aspect of this application provides a device, including a processor and a memory. The memory is configured to store program code, and the processor is configured to invoke the program code in the memory, to enable a device to perform the methods according to the foregoing aspects.

A tenth aspect of this application provides a computer-readable storage medium. The computer-readable storage medium stores instructions, and when the instructions are run on a computer, the computer is enabled to perform the methods according to the foregoing aspects.

An eleventh aspect of this application provides a computer program product. When the computer program product is run on a computer, the computer is enabled to perform the methods according to the foregoing aspects.

A twelfth aspect of this application provides a chip, including one or more processors. Some or all of the processors are configured to: read and execute computer instructions stored in a memory, to perform the methods according to the foregoing aspects. Optionally, the chip further includes the memory. Optionally, the chip further includes a communication interface, and the processor is connected to the communication interface. The communication interface is configured to receive data and/or information that needs to be processed. The processor obtains the data and/or the information from the communication interface, processes the data and/or the information, and outputs a processing result through the communication interface. Optionally, the communication interface is an input/output interface or a bus interface. The method provided in this application is implemented by one chip, or is implemented by a plurality of chips in cooperation.

### BRIEF DESCRIPTION OF DRAWINGS

FIG. 1 is a diagram of a network deployment scenario according to an embodiment of this application;
FIG. 2 is another diagram of a network deployment scenario according to an embodiment of this application;
FIG. 3 is a schematic flowchart of a data packet processing method according to an embodiment of this application;
FIG. 4 is a diagram of configuring a first rule and a second rule by a third device according to an embodiment of this application;
FIG. 5 is a diagram of a location of a first device according to an embodiment of this application;
FIG. 6 is a diagram of a location of a first device according to an embodiment of this application;
FIG. 7 is another schematic flowchart of a data packet processing method according to an embodiment of this application;
FIG. 8a is a diagram of a scenario in which a security policy becomes invalid according to an embodiment of this application;
FIG. 8b is a diagram of a data packet processing method according to an embodiment of this application;
FIG. 9 is a diagram of a structure of a data packet processing system according to an embodiment of this application;
FIG. 10 is a diagram of a structure of a data packet processing apparatus according to an embodiment of this application;
FIG. 11 is a diagram of another structure of a data packet processing apparatus according to an embodiment of this application;
FIG. 12 is a diagram of another structure of a data packet processing apparatus according to an embodiment of this application; and
FIG. 13 is a diagram of a structure of a device according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that with development of technologies and emergence of new scenarios, technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence.

The specific term "example" herein means "used as an example, embodiment or illustration". Any embodiment described as "an example" is not necessarily explained as being superior or better than other embodiments.

This application may be applied to various scenarios in which transmission of a data packet is performed in a network. For example, in a process in which transmission of the data packet is performed in the network, a source IP address and/or a destination IP address carried in the data packet may be translated. As a result, a security device in the network cannot obtain a real IP address of the data packet, and a security policy deployed in the security device is usually set based on an IP quintuple, in other words, the security policy indicates to allow or forbid data packets from which source IP addresses to access the destination IP address. If the security device in the network cannot obtain the real IP address, and cannot match the security policy based on the real IP address, the security policy configured in the security device becomes invalid, and the security device cannot accurately make a decision of allowing or forbidding access behavior corresponding to the data packet.

For example, if a device in the network uses a virtualization technology, when sending a data packet to another device, the device translates a real source IP address of the data packet into an agent IP address by using a hypervisor (hypervisor) layer. As a result, the security device in the network cannot obtain the real source IP address corresponding to the data packet, and cannot accurately make a decision of allowing or forbidding access behavior corresponding to the data packet.

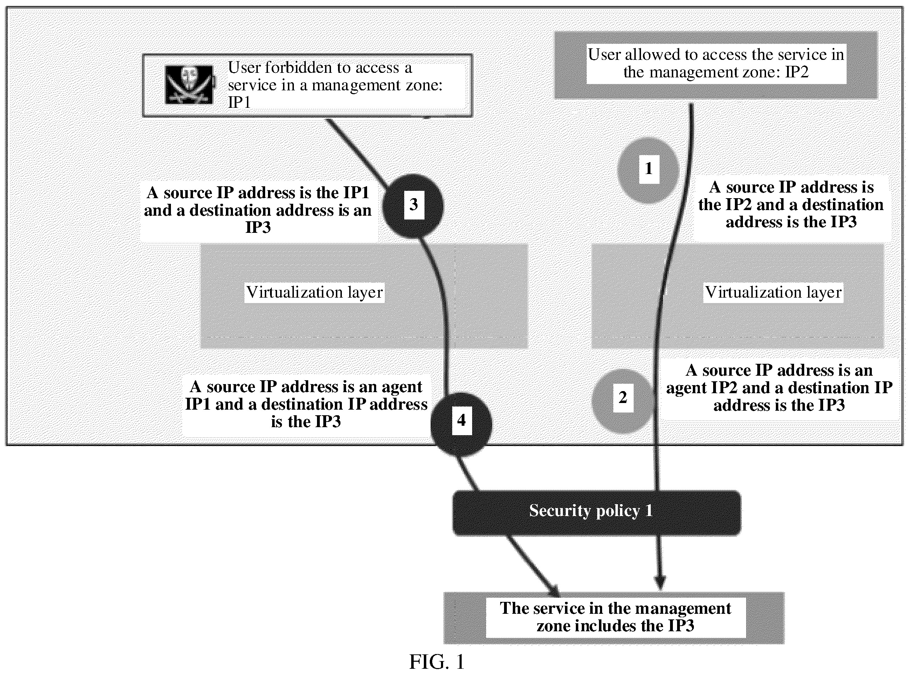

For more intuitive understanding of this solution, FIG. 1 is a diagram of a network deployment scenario according to an embodiment of this application. As shown in FIG. 1, in a network, an IP1 is forbidden to access an IP3, and an IP2 is allowed to access the IP3. In this case, a security policy 1 set on a security device in the network may include: forbidding a data packet whose source IP address is the IP1 and whose destination address is the IP3 to pass.

After a data packet 1 whose source IP address is the IP1 and whose destination address is the IP3 is processed by using a virtualization layer, the IP1 in the data packet 1 is translated into an agent IP1. In this case, when the data packet 1 passes through the security device, because a source IP address obtained by the security device from the data packet 1 is the agent IP1, a destination IP address is the IP3, and the security policy 1 is not matched, the data packet 1 is allowed to pass.

After a data packet 2 whose source IP address is the IP2 and whose destination address is the IP3 is processed by using the virtualization layer, the IP2 in the data packet 2 is translated into an agent IP2. In this case, when the data packet 2 passes through the security device, because a source IP address obtained by the security device from the data packet 2 is the agent IP2, a destination IP address is the IP3, and the security policy 1 is also not matched, the data packet 2 is allowed to pass.

A setting objective of the security policy 1 is to forbid the data packet 1 to pass and allow the data packet 2 to pass. However, due to an operation of "translating the source IP address by using the virtualization layer", the security device makes an incorrect decision of "allowing the data packet 1 to pass". It should be understood that the example in FIG. 1 is merely for ease of understanding of this solution, and is not intended to limit this solution.

For another example, if an access source accesses another target resource by using a source network address translation (source network address translation, SNAT) technology, a source IP address of a data packet is also translated in a transmission path of the data packet. As a result, a security device through which the data packet subsequently passes cannot obtain a real source IP address corresponding to the data packet, and cannot accurately make a decision of allowing or forbidding access behavior corresponding to the data packet.

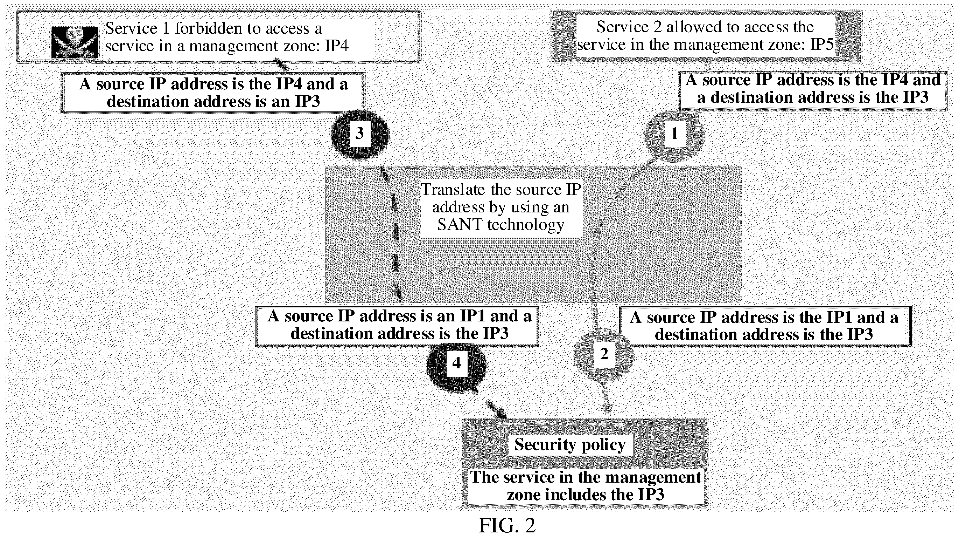

For more intuitive understanding of this solution, FIG. 2 is another diagram of a network deployment scenario according to an embodiment of this application. As shown in FIG. 2, a service 1 and a service 2 are deployed in a same local area network, an IP address of the service 1 is an IP4 of a private network, and an IP address of the service 2 is an IP5 of the private network. Source IP addresses of data packets sent in the service 1 and the service 2 are translated based on an SNAT technology, so that both the data packets sent in the service 1 and the service 2 access a network by using a same external IP (for example, an external IP6 in FIG. 2). In this case, both the source IP addresses of the data packets sent in the service 1 and the service 2 are the foregoing external IPs.

If the network wants to forbid a data packet 3 sent in the service 1 to access an IP3 and wants a data packet 4 sent in the service 2 to access the IP3, because a security device in the network cannot obtain the IP4 of the private network (in other words, a real source IP address of the data packet 3) or the IP5 of the private network (in other words, a real source IP address of the data packet 4), the data packet 3 and the data packet 4 cannot be distinguished. As a result, the security device cannot accurately make a decision on the data packet 3 and the data packet 4. It should be understood that the example in FIG. 2 is merely for ease of understanding of this solution, and is not intended to limit this solution.

It should be noted that, in another scenario in which transmission of a data packet is performed in the network, a source IP address and/or a destination IP address in the data packet may alternatively be translated by using another technology. This is not exhaustively listed herein.

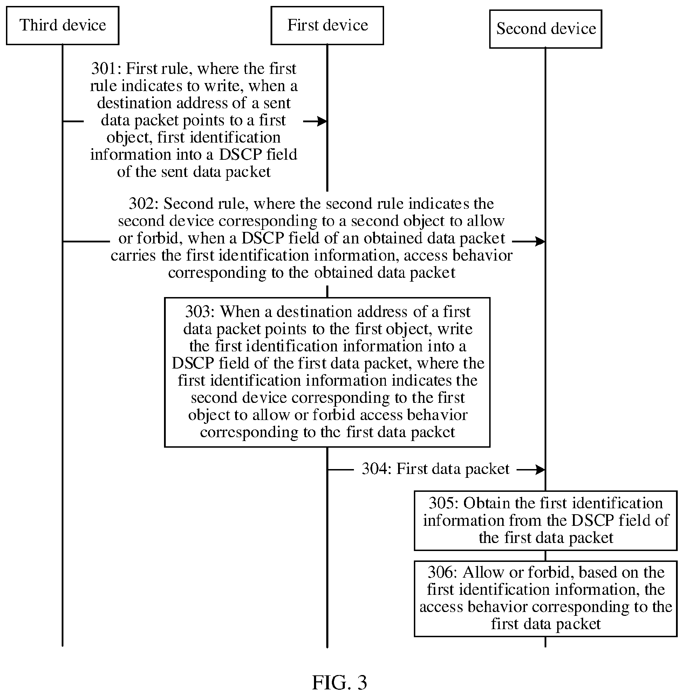

In a plurality of scenarios in which transmission of the data packet is performed in the network, the source IP address and/or the destination IP address in the data packet may be translated. As a result, the security device in the network cannot accurately make a decision of allowing or forbidding access behavior corresponding to the data packet. To resolve the foregoing problem, this application provides a data packet processing method. Specifically, FIG. 3 is a schematic flowchart of a data packet processing method according to an embodiment of this application. The data packet processing method provided in this embodiment of this application may include step 301 to step 306.

301: A third device sends a first rule to a first device in a network, where the first rule indicates to write, when a destination address of a sent data packet points to a first object, first identification information into a differentiated services code point DSCP field of the sent data packet.

In this embodiment of this application, after the third device has determined that behavior of accessing the first object by a second object is allowed or forbidden in the network, the third device may send the first rule to one or more first devices corresponding to the second object in the network. The first rule indicates to write, when the destination address of the sent data packet points to the first object, the first identification information into the differentiated services code point (differentiated services code point, DSCP) field of the sent data packet.

For example, the third device may be a network management device or a network device (for example, a packet forwarding device or a firewall) in the network, or the third device may be a virtualization device. This may be specifically determined flexibly with reference to an actual application scenario, and is not limited herein.

For example, the first object or the second object may include any one of the following: a service of one type, a name of one network area, a user of one type, an object of another type, or the like. For example, an internet user is allowed to access a web service in the network. In this case, the second object includes a user of one type (that is, the internet user), and the first object includes a service of one type (that is, the web service). For another example, an internet user is forbidden to access a database service in the network. In this case, the second object includes a user of one type (that is, the internet user), and the first object includes a service of one type (that is, the database service). For another example, a web service is allowed to access a database service in the network. In this case, the second object includes a service of one type (that is, the web service), and the first object includes another service of one type (that is, the database service). For another example, an office campus is forbidden to access a data center in the network. In this case, the second object includes a name of one network area (that is, the office campus), and the first object includes a name of another network area (that is, the data center). For another example, an office campus is forbidden to access a data center in the network. In this case, the second object includes a name of one network area (that is, the office campus), and the first object includes a name of another network area (that is, the data center) and the like. The behavior of accessing the first object by the second object represents access behavior between services, between networks, between users, or between a user, a service, and a network. Specific representation forms of the first object and the second object may be determined with reference to an actual situation in the network, and are not limited herein.

For example, the destination address of the data packet may be a destination IP address, a destination port, a destination medium access control (medium access control, MAC) address, or a combination of the foregoing information.

For example, because the first object may be a service of one type, a name of one network area, or a user of one type, when the first object is a service 1 (that is, an example of a service of one type), that "the destination address of the sent data packet points to the first object" may be understood as that a device located at the destination address can provide the service 1. Alternatively, when the first object is a network area 1 (that is, an example of a name of one network area), that "the destination address of the sent data packet points to the first object" may be understood as that the destination address is included in an address range covered by the network area 1. Alternatively, when the first object is a user of a type 1, that "the destination address of the sent data packet points to the first object" may be understood as that an address range occupied by the user of the type 1 includes the destination address.

A first data packet may include control information and data, the control information of the first data packet may also be referred to as a header (header) of the first data packet, the data of the first data packet may also be referred to as a payload (payload) of the first data packet, and the control information of the first data packet includes a DSCP field.

The third device may perform step 301 in a plurality of manners. In an implementation, the third device may directly send, to the first device, a third data packet carrying the first rule. Correspondingly, the first device can obtain the first rule from the third data packet. The first rule indicates to write, when a destination address of a data packet (for ease of description, referred to as the "first data packet" subsequently) sent by the first device points to the first object, first identification information corresponding to the first object into the DSCP field of the first data packet.

Optionally, data carried in the third data packet further includes a first address set corresponding to the first object. In other words, when the destination address of the first data packet belongs to the first address set, it indicates that the destination address of the first data packet points to the first object. Alternatively, data carried in the third data packet may not include a first address set corresponding to the first object, but the first address set has been preconfigured in the first device. A specific implementation may be flexibly determined with reference to an actual application scenario.

In another implementation, if a virtualization technology is used in the first device, the first device may include a hypervisor (hypervisor) layer and at least one instance, and the third device may further send the first rule to the hypervisor layer and/or a first instance in the first device. For example, the "instance" may be specifically represented as a virtual machine, a container, another form, or the like.

Specifically, in a case, the third device may send the first rule to the hypervisor layer in the first device. The first rule indicates that when the destination address of the first data packet sent by the first device points to the first object, the hypervisor layer in the first device writes the first identification information into the DSCP field of the first data packet. In other words, the hypervisor layer in the first device independently performs the operation of "writing the first identification information into the DSCP field".

For example, the third device may perform, by using an existing function of a neutron (neutron) component of a cloud computing management platform (openstack), the step of "sending the first rule to the hypervisor layer in the first device", to reduce computer resource overheads caused by the step of "sending the first rule to the hypervisor layer in the first device". Specifically, an L3-agent (agent) process may be deployed at the hypervisor layer in the first device, and is used to communicate with the neutron component of the openstack. The third device requests, by invoking an interface, the neutron component of the openstack to add the first rule to the hypervisor layer in the first device. The neutron component of the openstack may send the first rule to the L3-agent process at the hypervisor layer in the first device. For example, the first rule may be delivered to a PREROUTING (PREROUTING) chain of a mangle (mangle) table at the hypervisor layer in the first device.

In another case, one or more instances are deployed in the third device, and a first instance in the one or more instances corresponds to the second object. The third device may send the first rule to the first instance in the first device. The first rule indicates that when the destination address of the first data packet sent by the first device points to the first object, the first instance in the first device writes the first identification information into the DSCP field of the first data packet. In other words, the first instance in the first device independently performs the operation of "writing the first identification information into the DSCP field".

For example, because the second object may be a service of one type, a name of one network area, or a user of one type, when the second object is a service 2 (that is, an example of a service of one type), that "the first instance corresponds to the second object" may be understood as that the first instance is an instance that is in the first device and that is configured to provide the service 2. Alternatively, when the second object is a user of a type 2, that "the first instance corresponds to the second object" may be understood as that the first instance in the first device is used by the user of the type 2. Alternatively, when the second object is a network area 2 (that is, an example of a name of one network area), that "the first instance corresponds to the second object" may be understood as that an address of the first instance is included in an address range covered by the network area 2.

For example, the third device may perform, by using an existing function of a cloud computing management platform, the step of "sending the first rule to the first instance in the first device", to reduce computer resource overheads caused by the step of "sending the first rule to the first instance in the first device". Specifically, an agent (agent) process may be deployed in the first instance in the first device, and is used to communicate with a neutron component of the openstack. The third device requests, by invoking an interface, the neutron component of the openstack to add the first rule to the first instance in the first device. The neutron component of the openstack may send the first rule to the agent process in the first instance in the first device.

In another case, one or more instances are deployed in the third device, and the third device may send the first rule to each instance in the first device. The first rule indicates that when the destination address of the first data packet sent by the first device points to the first object, the instance in the first device writes the first identification information into the DSCP field of the first data packet. In other words, each instance in the first device independently performs the operation of "writing the first identification information into the DSCP field".

In another case, the third device may send a first sub-rule to the first instance in the first device, and send a second sub-rule to the hypervisor layer in the first device. The first rule includes the first sub-rule and the second sub-rule. The first sub-rule indicates that when the destination address of the first data packet sent by the first device points to the first object, the first instance in the first device writes first sub-identification information into a first field in the DSCP field of the first data packet. The second sub-rule indicates that when the destination address of the first data packet points to the first object, the hypervisor layer in the first device writes second sub-identification information into a second field in the DSCP field of the first data packet. The first identification information includes the first sub-identification information and the second sub-identification information. For example, the first field and the second field are different bits in the DSCP field. In other words, the first instance and the hypervisor layer in the first device jointly perform the operation of "writing the first identification information into the DSCP field".

Optionally, because different first objects may exist in the network, different first objects may correspond to different first identification information. For example, when the first object is the web service, first identification information corresponding to the web service may be af11. When the first object is the database service, first identification information corresponding to the database service may be af12. It should be understood that the example herein is merely for ease of understanding of this solution, and which first identification information is specifically used is not limited herein.

A value written by the first device into the DSCP field is a binary value. Optionally, the first identification information carried in the first rule may not be expressed in a binary method. When writing the first identification information into the DSCP field, the first device may map first identification information in a non-binary form to first identification information in a binary form. For further understanding of this solution, the following uses Table 1 to provide an example for a case of mapping a plurality of pieces of first identification information in the non-binary form to first identification information in the binary form.

**Table 1**

| First identification information in the non-binary form | First identification information in the binary form | First identification information in the non-binary form | First identification information in the binary form |
|---|---|---|---|
| af11 | 001010 | af41 | 100010 |
| af12 | 001100 | cs1 | 001000 |
| af13 | 001110 | cs2 | 010000 |
| af21 | 010010 | cs3 | 011000 |
| af31 | 011010 | cs4 | 100000 |

Table 1 shows the plurality of pieces of first identification information in the non-binary form, and also shows first identification information in the binary form corresponding to each piece of first identification information in the non-binary form. It should be understood that the example in Table 1 is merely for ease of understanding of this solution, and is not intended to limit this solution.

302: The third device sends a second rule to a second device corresponding to the first object in the network, where the second rule indicates the second device to allow or forbid, when a DSCP field of an obtained data packet carries the first identification information, access behavior corresponding to the obtained data packet.

In this embodiment of this application, after the third device has determined that the behavior of accessing the first object by the second object is allowed or forbidden in the network, the third device may further send the second rule to the second device corresponding to the first object in the network. The second rule indicates to allow or forbid, when the DSCP field of the data packet (for ease of description, referred to as a "second data packet" subsequently) obtained by the second device carries the first identification information, the access behavior corresponding to the obtained data packet.

For example, if the third device determines to allow the second object to access the first object, the second rule may indicate to allow, when the DSCP field of the second data packet carries the first identification information, the access behavior corresponding to the obtained data packet. If the third device determines to forbid the second object to access the first object, the second rule may indicate to forbid, when the DSCP field of the second data packet carries the first identification information, the access behavior corresponding to the obtained data packet.

Optionally, the second rule may further have a constraint condition on another option. The option may include any one or more of the following options of the second data packet: a used protocol type, a source IP address, a source port, a destination IP address, a destination port, another option, or the like. The "constraint condition on the option" may include a value range of each option.

For example, the protocol type includes but is not limited to a transmission control protocol (Transmission Control Protocol, TCP), a user datagram protocol (User Datagram Protocol, UDP), or another type of protocol. This is not exhaustively listed herein. Both the source port and the destination port include at least one port. For example, the port may be a port 80, a port 90, or another port. This is not exhaustively listed herein.

For example, the second rule may include: discarding a data packet whose source IP address is 100.64.0.0/11 and whose DSCP field value is not cs4. In the second rule, a constraint condition on the DSCP field value (that is, "the DSCP field value being cs4") is mandatory, and a constraint condition on the source IP address (that is, "the source IP address being 100.64.0.0/11") is optional. In this case, regardless of whether the source IP address of the second data packet is 100.64.0.0/11, because a DSCP field definitely exists in the second data packet, the second data packet definitely matches the second rule. Then, whether to discard the second data packet is determined according to the second rule based on a value of the DSCP field of the second data packet. It should be understood that the example herein is merely for ease of understanding of this solution, and is not intended to limit this solution.

The third device may perform step 302 in a plurality of manners. In an implementation, the third device may directly send, to the second device, a fourth data packet carrying the second rule. Correspondingly, the second device can obtain the second rule from the fourth data packet.

For example, the second rule carried in the fourth data packet sent by the third device to the second device may include: rule deny ip source 100.64.0.0 0.31.255.255 destination 100.125.0.0 0.0.255.255 dscpcs1. A meaning of the second rule may include: discarding a data packet whose source IP address is 100.64.0.0/11, whose destination IP address is 100.125.0.0/16, and whose DSCP field value is cs1. In other words, when the source IP address of the obtained data packet is 100.64.0.0/11, the destination IP address is 100.125.0.0/16, and the DSCP field value is cs1, the access behavior corresponding to the data packet is forbidden. It should be noted that, "the DSCP field value" is mandatory in the second rule, and both "the source IP address" and "the destination IP address" are optional in the second rule. It should be understood that the foregoing example is merely for ease of understanding of this solution, and is not intended to limit this solution.

In another implementation, if the virtualization technology is used in the second device, the second device may include a hypervisor (hypervisor) layer, and the third device may further send the second rule to the hypervisor layer in the second device. For a specific implementation in which "the third device sends the second rule to the hypervisor layer in the second device", refer to the foregoing descriptions in which "the third device sends the first rule to the hypervisor layer in the first device". Details are not described herein.

For example, the second rule sent by the third device to a PREROUTING chain of a mangle table at the hypervisor layer in the second device may include: iptables -t mangle -A PREROUTING -m dscp ! --dscp cs4 -s 100.64.0.0/11 -j DROP. A meaning of the second rule includes: in the PREROUTING chain of the mangle table, configuring a rule for discarding the data packet whose source IP address is 100.64.0.0/11 and whose DSCP field value is not cs4. In other words, when the source IP address of the obtained data packet is 100.64.0.0/11 and the DSCP field value is cs4, the access behavior corresponding to the data packet is allowed. It should be noted that "the DSCP field value" is mandatory in the rule, and "the source IP address" is optional in the rule. It should be understood that the foregoing example is merely for ease of understanding of this solution, and is not intended to limit this solution.

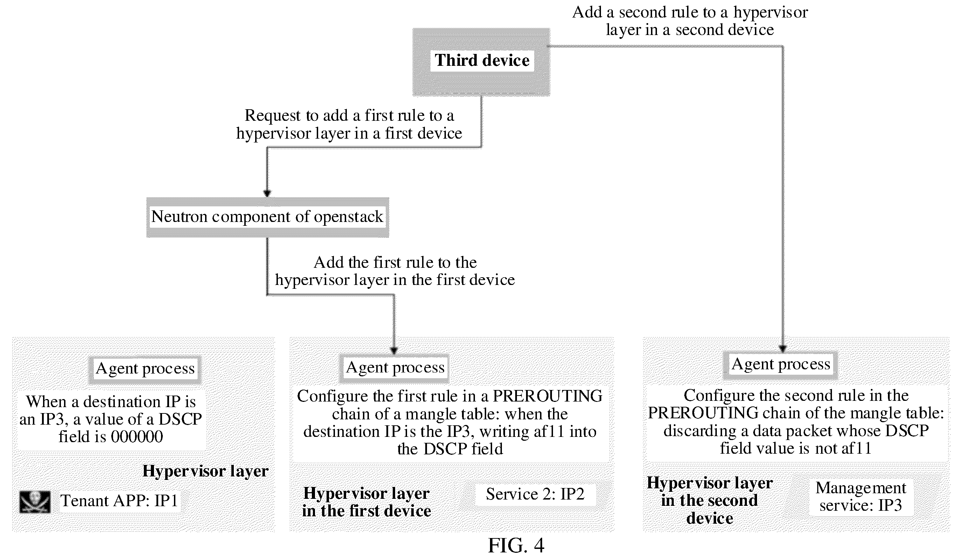

For more intuitive understanding of this solution, FIG. 4 is a diagram of configuring a first rule and a second rule by a third device according to an embodiment of this application. In a network, an IP1 occupied by an application (application, APP) used by a tenant is forbidden to access an IP3 used to provide a management service, and an IP2 used to provide a service (service) 2 is allowed to access the IP3 used to provide the management service. Both the management service and the service 2 are services provided in the network.

As shown in FIG. 4, the third device may request a neutron component of openstack to add the first rule to a PREROUTING chain of a mangle table at a hypervisor layer in a first device. The first rule is: when a destination IP address of a data packet sent by the first device is the IP3, writing af11 into a DSCP field of the data packet. The third device may further directly configure the second rule in a PREROUTING chain of a mangle table at a hypervisor layer in a second device. The second rule is: discarding a data packet whose DSCP field value is not af11.

When the first device sends a first data packet, if a destination IP address of the sent first data packet is the IP3, the first device writes af11 into a DSCP field by using the hypervisor layer. When the first data packet sent by the first device arrives at the second device, because the DSCP field of the first data packet carries af11, the second device allows access behavior of the first data packet.

When a device (for ease of description, referred to as a "fourth device" subsequently) in which the application (application, APP) used by the tenant is located sends a data packet, because the first rule is not configured in the fourth device, a value of a DSCP field of the data packet sent by the fourth device is 000000. When the data packet sent by the fourth device arrives at the second device, because the DSCP field of the data packet does not carry af11, the second device forbids access behavior of the data packet. It should be understood that the example in FIG. 4 is merely for ease of understanding of this solution, and is not intended to limit this solution.

In this embodiment of this application, another device sends rules to the first device and the second device. To be specific, this helps implement that another control device delivers rules to a plurality of devices in the network in a unified manner, and helps avoid a conflict between rules in different devices in the network, to further improve network security.

303: When the destination address of the first data packet points to the first object, the first device writes the first identification information into the DSCP field of the first data packet, where the first identification information indicates the second device corresponding to the first object to allow or forbid access behavior corresponding to the first data packet.

In this embodiment of this application, after the third device deploys the first rule to the first device corresponding to the second object, when the first device wants to send the first data packet (in other words, send any data packet), the first device may determine, based on an indication of the first rule, whether the destination address of the first data packet points to the first object. If a determining result is that the destination address of the first data packet points to the first object, the first identification information corresponding to the first object may be written into the DSCP field of the first data packet. The first identification information indicates the second device corresponding to the first object to allow or forbid the access behavior corresponding to the first data packet.

The DSCP field of the first data packet has eight bits, and the eight bits may include a 0^{th} bit to a 7^{th} bit. Optionally, the first device may use six bits in the eight bits to perform a filling operation of the first identification information. For example, the first identification information may occupy any one or more bits in the 0^{th} bit to the 5^{th} bit of the DSCP field.

Optionally, the first device corresponding to the second object may be a device that generates the first data packet, or the first device corresponding to the second object may be a switch most connected to the device that generates the first data packet.

In a case, the first device corresponding to the second object is the device that generates the first data packet. For example, because the second object may be a service of one type, a name of one network area, or a user of one type, when the second object is a service 3 (that is, an example of a service of one type), "the first device corresponding to the second object" may be understood as that a device that can provide the service 3 is the first device. Alternatively, when the second object is a network area 3 (that is, an example of a name of one network area), "the first device corresponding to the second object" may be understood as that a device in an address range covered by the network area 3 is the first device. Alternatively, when the second object is a user of a type 3, "the first device corresponding to the second object" may be understood as that a device in an address range occupied by the user of the type 3 is the first device.

In another case, the first device corresponding to the second object is the switch most connected to the device that generates the first data packet. For example, when the second object is a service 3 (that is, an example of a service of one type), "the first device corresponding to the second object" may be understood as a switch most connected to a device that can provide the service 3, and a communication connection exists between the device that can provide the service 3 and the switch. Alternatively, when the second object is a network area 3 (that is, an example of a name of one network area), "the first device corresponding to the second object" may be understood as a switch that is located outside the network area 3 and that is most connected to the network area 3, and a device in the network area 3 is communicatively connected to the switch. Alternatively, when the second object is a user of a type 3, "the first device corresponding to the second object" may be understood as a switch that is located outside an address range occupied by the user of the type 3 and that is most connected to the address range occupied by the user of the type 3, and a device occupied by the user of the type 3 is communicatively connected to the switch.

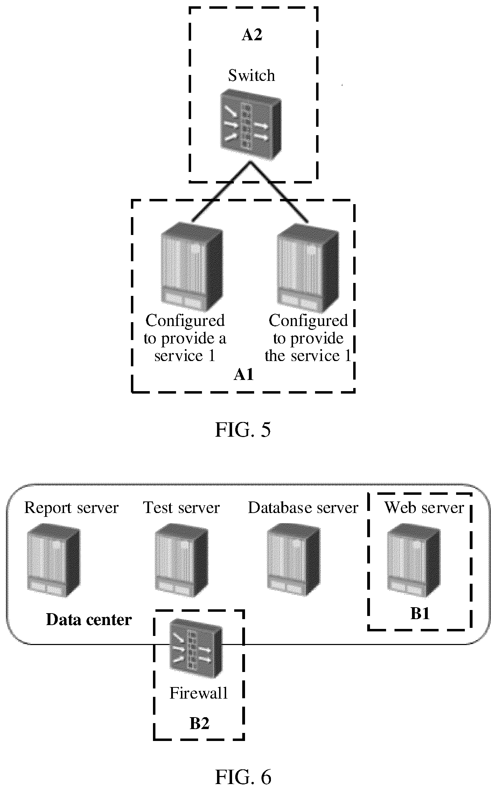

For more intuitive understanding of this solution, FIG. 5 is a diagram of a location of a first device according to an embodiment of this application. As shown in FIG. 5, any device configured to provide a service 1 may be considered as A1, and two devices configured to provide the service 1 are communicatively connected to one switch. The first device may select A1 or A2, A1 is a device that generates a first data packet, and A2 is a switch most connected to the device that generates the first data packet. It should be understood that the example in FIG. 5 is merely for ease of understanding of this solution, and is not intended to limit this solution.

In this embodiment of this application, when generating the first data packet, the device needs to write data into control information of the first data packet, and the device that generates the first data packet performs an operation of "writing first identification information into a DSCP field", to improve convenience of this solution. A switch connected to the device that generates the first data packet is generally connected to a plurality of devices that generate the first data packet, and the switch performs the operation of "writing first identification information into a DSCP field". In comparison with a case of sending a first rule to the plurality of devices that generate the first data packet, in this case, the first rule needs to be sent to only one switch, to reduce computer resources consumed in a step of "sending the first rule to the first device".

The first device may perform, in a plurality of manners, "writing the first identification information into a DSCP field of the first data packet". In an implementation, if a virtualization technology is used in the first device, a hypervisor layer and at least one instance may be deployed in the first device. In this case, the first device may write the first identification information into the DSCP field of the first data packet by using the hypervisor layer and/or a first instance. For meanings of nouns in the step, refer to the descriptions in the foregoing steps. Details are not described herein again.

In a case, the hypervisor layer in the first device may write all the first identification information into the DSCP field of the first data packet. In this embodiment of this application, in comparison with the instance in the first device, the hypervisor layer in the first device needs a higher management right. Correspondingly, a probability that the hypervisor layer in the first device is successfully attacked by a hacker is lower, in other words, security of the hypervisor layer in the first device is higher. Performing a write operation of the first identification information by using the hypervisor layer in the first device helps improve security of the operation, in other words, reduce a probability that an invalid data packet carries the first identification information, to reduce a probability that the invalid data packet successfully accesses a second device. This helps improve network security.

In another case, the first instance in the first device writes first sub-identification information into a first field in the DSCP field, where the first instance is an instance that corresponds to a second object and that is in a plurality of instances deployed in the first device. The hypervisor layer in the first device writes second sub-identification information into a second field in the DSCP field, where the first identification information includes the first sub-identification information and the second sub-identification information. For example, the first field and the second field are different bits in the DSCP field.

In this embodiment of this application, because the plurality of instances may be deployed in the first device, and when the first device is the device that generates the first data packet, different instances may correspond to different objects, for example, different instances in the first device are configured to provide services of different types, or different instances in the first device are occupied by users of different types, the first instance and the hypervisor layer in the first device jointly perform a write operation of the first identification information, so that "the write operation of the first identification information" can be managed from a more fine-grained perspective, to avoid a case in which a data packet sent by an instance that is in the first device and that corresponds to another object also carries the first identification information, so as to further reduce a probability that an invalid data packet successfully accesses a second device, and further improve network security.

In another case, the first device writes the first identification information into the DSCP field of the first data packet by using an instance. For example, in an implementation, each instance in the first device may write the first identification information into the DSCP field of the first data packet. In another implementation, the first instance in the first device may write the first identification information into the DSCP field of the first data packet, where the first instance is an instance that corresponds to a second object and that is in a plurality of instances deployed in the first device.

In this embodiment of this application, another implementation solution of writing the first identification information into the DSCP field of the first data packet is provided, to improve implementation flexibility of this solution. If only the first instance writes the first identification information into the DSCP field of the first data packet, a case in which a data packet sent by an instance that is in the first device and that corresponds to another object also carries the first identification information can be avoided, to further reduce a probability that an invalid data packet successfully accesses a second device, and further improve network security.

In another implementation, the first device may alternatively write the first identification information into the DSCP field without using the hypervisor layer and/or the instance, and the first device may write the first identification information into the DSCP field of the first data packet by using an operating system.

304: The first device sends the first data packet to the second device.

In this embodiment of this application, the first device may send the first data packet to the second device via the network, and correspondingly, the second device can obtain the first data packet.

305: The second device obtains the first identification information from the DSCP field of the first data packet.

In this embodiment of this application, after obtaining the first data packet, the second device may read information from the DSCP field of the first data packet. Optionally, the second device may obtain, from the DSCP field of the first data packet, the first identification information corresponding to the first object; or the second device may obtain second identification information from the DSCP field of the first data packet. For example, if no information is written into the DSCP field of the first data packet, the second identification information may be 000000. For another example, if identification information corresponding to another third object is written into the DSCP field of the first data packet, the second identification information may alternatively represent the identification information corresponding to the third object. For another example, if information is randomly written into the DSCP field of the first data packet by an invalid device, the second identification information may alternatively represent the randomly written information.

Optionally, the second device corresponding to the first object may be a server to which the destination address of the first data packet points, and/or the second device corresponding to the first object may be a security device that manages the server, or may be understood as a security device directly connected to the server. The server corresponds to the first object. A security device in the network is a device that is in the network and on which a security policy is deployed. The security device may include any one or more of the following: a firewall, a network device configured to forward a packet, or the like.

For example, because the first object may be a service of one type, a name of one network area, or a user of one type, when the first object is a service 4 (that is, an example of a service of one type), that "the server to which the destination address of the first data packet points corresponds to the first object" may be understood as that the server located at the destination address can provide the service 4. Alternatively, when the first object is a network area 4 (that is, an example of a name of one network area), that "the server to which the destination address of the first data packet points corresponds to the first object" may be understood as that the server located at the destination address belongs to the network area 4. Alternatively, when the first object is a user of a type 4, that "the server to which the destination address of the first data packet points corresponds to the first object" may be understood as that the server located at the destination address is used by the user of the type 4.

For more intuitive understanding of this solution, FIG. 6 is a diagram of a location of a first device according to an embodiment of this application. As shown in FIG. 6, a web server configured to provide a web (web) service is considered as B1, the web server is located in a network area "data center", and a security device closest to the web server is a firewall configured to: manage and control whether a data packet is allowed to enter the data center. A second device may select B1 or B2, an address of B1 is a destination address of a first data packet, and B2 is a security device directly connected to the destination address of the first data packet in a network. It should be understood that the example in FIG. 6 is merely for ease of understanding of this solution, and is not intended to limit this solution.

306: The second device allows or forbids, based on the first identification information, the access behavior corresponding to the first data packet.

In this embodiment of this application, after reading the information from the DSCP field of the first data packet, the second device may determine, based on the read information according to the second rule, whether to allow the access behavior corresponding to the first data packet, so as to allow or forbid the access behavior corresponding to the first data packet.

The second device may perform, in a plurality of manners, the step of "determining, based on the read information according to the second rule, whether to allow the access behavior corresponding to the first data packet". In an implementation, if the virtualization technology is used in the second device, the second device may determine, by using the hypervisor layer according to the second rule based on the information read from the DSCP field of the first data packet, whether to allow the access behavior corresponding to the first data packet.

In a case, the second rule indicates to allow, when the DSCP field of the obtained data packet carries the first identification information, the access behavior corresponding to the obtained data packet. If the hypervisor layer in the second device obtains the first identification information from the DSCP field of the first data packet, it is determined to allow the access behavior corresponding to the first data packet. If the hypervisor layer in the second device obtains the second identification information from the DSCP field of the first data packet, it is determined to allow the access behavior corresponding to the first data packet.

In another case, the second rule indicates to forbid, when the DSCP field of the obtained data packet carries the first identification information, the access behavior corresponding to the obtained data packet. If the hypervisor layer in the second device obtains the first identification information from the DSCP field of the first data packet, it is determined to forbid the access behavior corresponding to the first data packet. If the hypervisor layer in the second device obtains the second identification information from the DSCP field of the first data packet, it is determined to allow the access behavior corresponding to the first data packet.

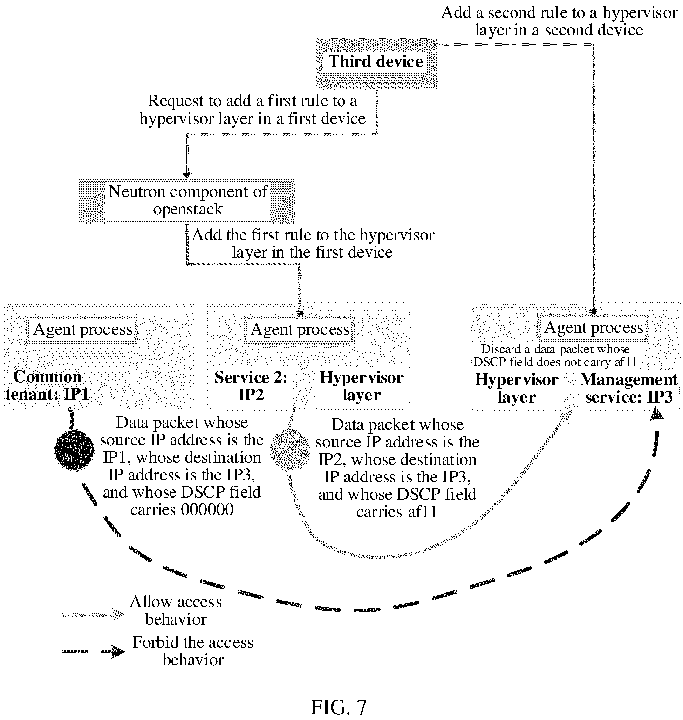

For more intuitive understanding of this solution, FIG. 7 is another schematic flowchart of a data packet processing method according to an embodiment of this application. FIG. 7 may be understood with reference to FIG. 4. After a third device configures a first rule for a hypervisor layer in a first device (namely, a device configured to provide a service 2) by using a neutron component of openstack, and configures a second rule for a hypervisor layer in a second device configured to provide a management service, as shown in FIG. 7, when the device configured to provide the service 2 sends a data packet, and when a destination IP address of the sent data packet is an IP3, a DSCP field of the data packet carries af11. In this case, the second device determines, according to the second rule, to allow access behavior of the data packet.

When a device whose IP address is an IP1 and that is used by a common tenant sends a data packet, because the first rule is not configured in the device, a value of a DSCP field of the data packet sent by the device is 000000. When the data packet arrives at the second device, because the DSCP field of the data packet does not carry af11, the second device determines, according to the second rule, to forbid access behavior of the data packet. It should be understood that the example in FIG. 7 is merely for ease of understanding, and is not intended to limit this solution.

For a specific implementation in which "the second device allows or forbids access behavior corresponding to a first data packet", in a case, if the second device is a server to which a destination address of the first data packet points, and if the second device allows the access behavior corresponding to the first data packet, the second device reads data carried in the first data packet, and executes instructions corresponding to the first data packet; or if the second device forbids the access behavior corresponding to the first data packet, the second device may perform packet discarding processing on the first data packet.

In another case, if the second device is a security device connected to a server to which a destination address of the first data packet points, and if the second device allows the access behavior corresponding to the first data packet, the second device may allow the first data packet to pass; or if the second device forbids the access behavior corresponding to the first data packet, the second device may forbid the first data packet to pass, and perform packet discarding processing on the first data packet.

In this embodiment of this application, only when the destination address of the first data packet is reached, can it be determined, based on information carried in a DSCP field of the first data packet, whether to allow performing the access behavior corresponding to the first data packet, to avoid processing the data packet based on a case in which the destination address does not point to a value of a DSCP field in a data packet of a first object. This helps further improve accuracy of a processing result of access behavior corresponding to a data packet.

When the first data packet arrives at the security device connected to the server to which the destination address of the first data packet points, it is determined, based on the information carried in the DSCP field of the first data packet, whether to allow performing the access behavior corresponding to the first data packet. In other words, an independent security device performs an operation of allowing or forbidding the first data packet to pass, to reduce burdens of the server to which the destination address of the first data packet points, and improve security of the server to which the destination address of the first data packet points. In addition, generally, one security device is configured to: manage and control whether a data packet is allowed to enter a plurality of devices, and the second rule is deployed on the security device, to help reduce computer resources consumed in a process of "deploying the second rule".

In this solution, an operation of writing first identification information into a DSCP field of a data packet is additionally introduced. Because a value of the DSCP field of the data packet generally does not change in a transmission process of the data packet, all devices in a network can obtain real first identification information from the DSCP field, and can accurately make, by using the first identification information, a decision of allowing or forbidding access behavior corresponding to the data packet, to improve network security. In addition, the DSCP field is a field that already exists in the data packet, identification information is chosen to be written into the DSCP field, and a great change does not need to be made in a conventional technology. This helps reduce computer resources consumed for implementing this solution. In addition, various devices in the network have a capability of interpreting control information of the data packet, and can obtain the identification information from the DSCP field of the data packet without upgrading the capability of the device in the network, to perform this solution, so as to further reduce the computer resources consumed for implementing this solution.

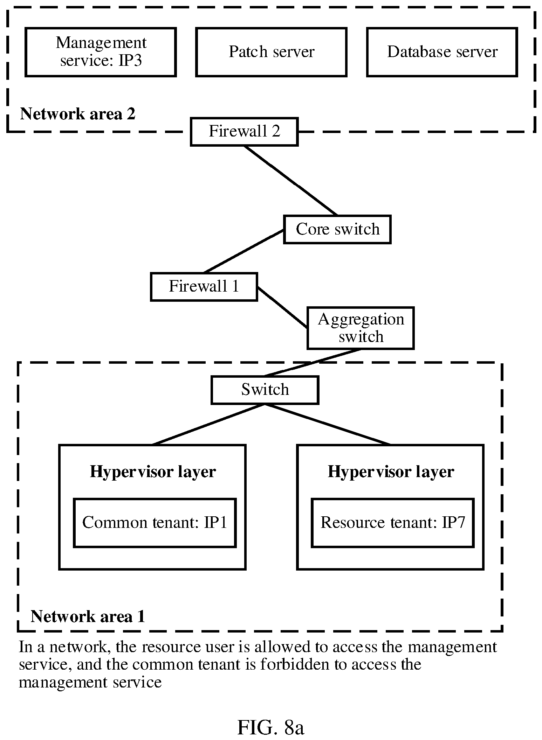

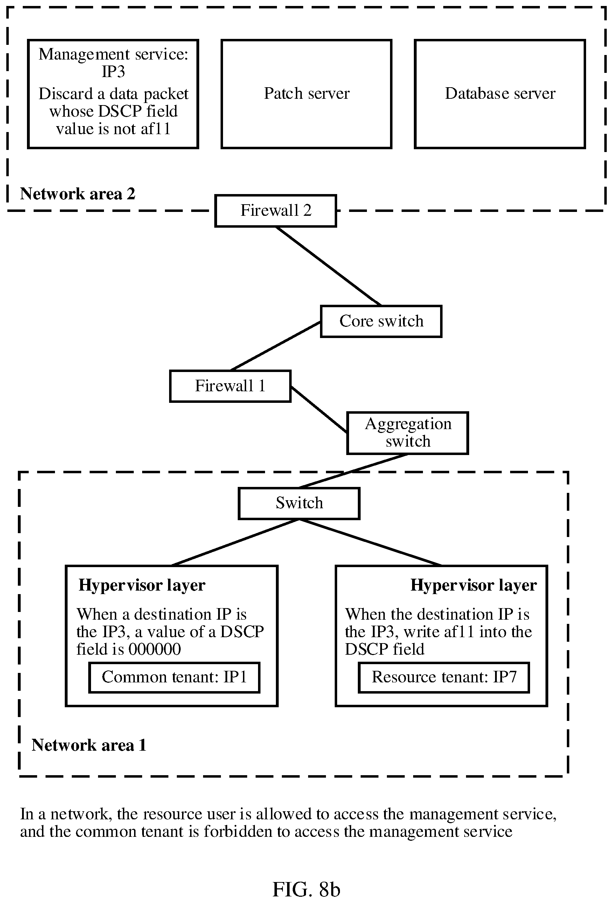

Optionally, based on the embodiments shown in FIG. 1 to FIG. 7, to further understand this solution, the following shows a specific embodiment of this application with reference to FIG. 8a and FIG. 8b. FIG. 8a is a diagram of a scenario in which a security policy becomes invalid according to an embodiment of this application. FIG. 8b is a diagram of a data packet processing method according to an embodiment of this application. First, refer to FIG. 8a. In a network, a resource tenant is allowed to access a management service, and a common tenant is forbidden to access the management service. In other words, that a security policy 2 may be configured on any one or more security devices (for example, a firewall 1 and a firewall 2 in FIG. 8a) in the network may include: forbidding a data packet whose source IP address is an IP1 to access an IP3, and allowing a data packet whose source IP address is an IP7 to access the IP3.

Hypervisor layers in devices in which the common tenant and the resource tenant are located translate a sent source IP address of a sent data packet. As a result, the security device in the network cannot obtain a real source IP address of a data packet, and consequently, a security policy configured on the security device becomes invalid.

Then, refer to FIG. 8b. The data packet processing method provided in this application may be used to configure a first rule for the hypervisor layer in the device in which the resource tenant is located, where the first rule is: when a destination IP address of a data packet is the IP3, writing af11 into a DSCP field of the data packet; and configure a second rule for a hypervisor layer in a device configured to provide the management service, where the second rule is: discarding a data packet whose DSCP field value is not af11. Because the first rule is not configured in the device in which the common tenant is located, when a destination IP address of a data packet sent by the device in which the common tenant is located is the IP3, a value carried in a DSCP field of the data packet is 000000, and when the data packet arrives at the device configured to provide the management service, the device configured to provide the management service may determine, according to the second rule, to discard the data packet.

Because the first rule is configured in the device in which the resource tenant is located, when a destination IP address of a data packet sent by the device in which the resource tenant is located is the IP3, a value carried in a DSCP field of the data packet is af11, and when the data packet arrives at the device configured to provide the management service, the device configured to provide the management service may determine, according to the second rule, to allow access behavior of the data packet. It should be understood that examples in FIG. 8a and FIG. 8b are merely for ease of understanding, and are not intended to limit this solution.

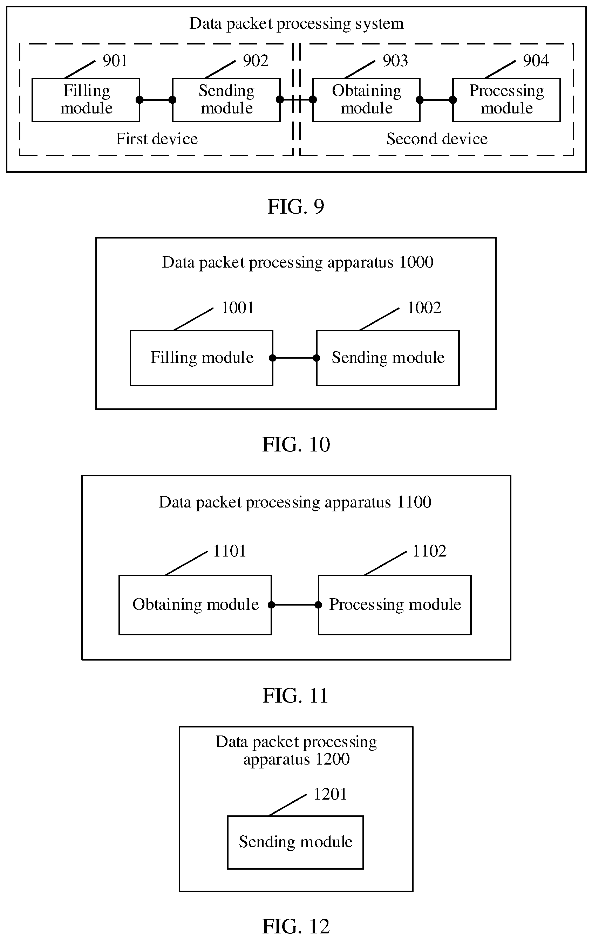

Based on the embodiments shown in FIG. 1 to FIG. 8b, FIG. 9 is a diagram of a structure of a data packet processing system according to an embodiment of this application. As shown in FIG. 9, the data packet processing system 900 includes a filling module 901 in a first device and a sending module 902 in the first device, and the data packet processing system further includes an obtaining module 903 in a second device and a processing module 904 in the second device. The filling module 901 is configured to: when a destination address of a first data packet points to a first object, write identification information into a differentiated services code point DSCP field of the first data packet, where the first device is a device that generates the first data packet, or the first device is a switch connected to the device that generates the first data packet. The sending module 902 is configured to send the first data packet. The obtaining module 903 is configured to obtain the first data packet, where the second device is a server to which the destination address of the first data packet points, or the second device is a security device that manages the server, and the server corresponds to the first object. The obtaining module 903 is further configured to obtain the identification information from the DSCP field of the first data packet. The processing module 904 is configured to: allow or forbid, based on the identification information, access behavior corresponding to the first data packet.

Optionally, the filling module 901 is specifically configured to write the identification information into the DSCP field of the first data packet by using a hypervisor layer.

Optionally, the filling module 901 is specifically configured to: write first sub-identification information into a first field in the DSCP field by using a first instance, where the first instance is an instance corresponding to a second object; and write second sub-identification information into a second field in the DSCP field by using the hypervisor layer, where the identification information includes the first sub-identification information and the second sub-identification information.

Optionally, the filling module 901 is specifically configured to write the identification information into the DSCP field of the first data packet by using an instance.

Optionally, the data packet processing system 900 further includes: a first receiving module in the first device, configured to receive a first rule sent by a third device, where the first rule indicates to write, when a destination address of a sent data packet points to the first object, the identification information into a DSCP field of the sent data packet. The data packet processing system 900 further includes: a second receiving module in the second device, configured to receive a second rule sent by the third device, where the second rule indicates to allow or forbid, when a DSCP field of an obtained data packet carries the identification information, access behavior corresponding to the obtained data packet.

FIG. 10 is a diagram of a structure of a data packet processing apparatus according to an embodiment of this application. The data packet processing apparatus 1000 is used in a first device. The data packet processing apparatus 1000 includes: a filling module 1001, configured to: when a destination address of a first data packet points to a first object, write identification information into a differentiated services code point DSCP field of the first data packet, where the identification information indicates a second device to allow or forbid access behavior corresponding to the first data packet; and a sending module 1002, configured to send the first data packet. The first device is a device that generates the first data packet, or the first device is a switch connected to the device that generates the first data packet. The second device is a server to which the destination address of the first data packet points, or the second device is a security device that manages the server, and the server corresponds to the first object.

Optionally, the filling module 1001 is specifically configured to write the identification information into the DSCP field of the first data packet by using a hypervisor layer.

FIG. 11 is a diagram of another structure of a data packet processing apparatus according to an embodiment of this application. The data packet processing apparatus 1100 is used in a second device. The data packet processing apparatus 1100 includes: an obtaining module 1101, configured to obtain a first data packet, where the second device is a server to which a destination address of the first data packet points, or the second device is a security device that manages the server, where the obtaining module 1101 is further configured to obtain identification information from a differentiated services code point DSCP field of the first data packet; and a processing module 1102, configured to: allow or forbid, based on the identification information, access behavior corresponding to the first data packet.

Optionally, the first data packet is from a first device, and the identification information in the first data packet is obtained by using a hypervisor layer in the first device.

FIG. 12 is a diagram of another structure of a data packet processing apparatus according to an embodiment of this application. The data packet processing apparatus 1200 is used in a third device. The data packet processing apparatus 1200 includes: a sending module 1201, configured to send a first rule to a first device in a network, where the first rule indicates to write, when a destination address of a data packet sent by the first device points to a first object, identification information into a differentiated services code point DSCP field of the sent data packet. The first device is a device that generates a first data packet, or the first device is a switch connected to the device that generates the first data packet. The sending module 1201 is further configured to send a second rule to a second device in the network, where the second rule indicates to allow or forbid, when a DSCP field of an obtained data packet carries the identification information, access behavior corresponding to the obtained data packet. The second device is a server to which a destination address of the first data packet points, or the second device is a security device that manages the server, and the server corresponds to the first object.

Optionally, the sending module 1201 is specifically configured to send the first rule to a hypervisor layer in the first device.

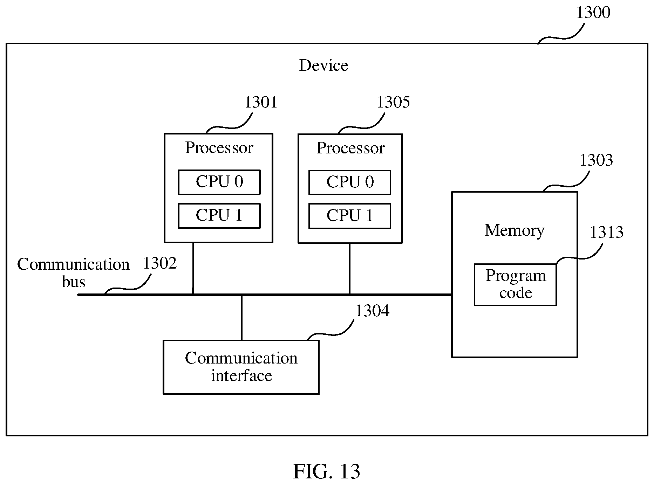

An embodiment of this application further provides a device. FIG. 13 is a diagram of a structure of a device according to an embodiment of this application. The device 1300 is equipped with any data packet processing apparatus in FIG. 10 to FIG. 13. The device 1300 is implemented by a general bus architecture.

The device 1300 includes at least one processor 1301, a communication bus 1302, a memory 1303, and at least one communication interface 1304.

Optionally, the processor 1301 may be a general CPU, an NP, or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD is a complex programmable logic device (complex programmable logic device, CPLD), a field-programmable logic gate array (field-programmable logic gate array, FPGA), generic array logic (generic array logic, GAL), or any combination thereof.

The communication bus 1302 is configured to perform information transmission between the foregoing components. The communication bus 1302 is classified into an address bus, a data bus, a control bus, and the like. For ease of representation, only one thick line is used to represent the bus in the figure, but this does not mean that there is only one bus or only one type of bus.

Optionally, the memory 1303 is a read-only memory (read-only memory, ROM) or another type of static storage device that can store static information and instructions. Alternatively, the memory 1303 is a random access memory (random access memory, RAM) or another type of dynamic storage device that can store information and instructions. Alternatively, the memory 1303 is an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. Optionally, the memory 1303 exists independently, and is connected to the processor 1301 through the communication bus 1302. Optionally, the memory 1303 and the processor 1301 are integrated.

The communication interface 1304 is configured to communicate with another device or a communication network by using any transceiver-type apparatus. The communication interface 1304 includes a wired communication interface. Optionally, the communication interface 1304 further includes a wireless communication interface. The wired communication interface is, for example, an ethernet interface. The ethernet interface is an optical interface, an electrical interface, or a combination thereof. The wireless communication interface is a wireless local area network (wireless local area network, WLAN) interface, a cellular network communication interface, a combination thereof, or the like.

During specific implementation, in an embodiment, the processor 1301 includes one or more CPUs, for example, a CPU 0 and a CPU 1 shown in FIG. 13.

During specific implementation, in an embodiment, the device 1300 may include a plurality of processors, for example, the processor 1301 and a processor 1305 shown in FIG. 13. Each of the processors is a single-core (single-CPU) processor or a multi-core (multi-CPU) processor. The processor herein is one or more devices, circuits, and/or processing cores configured to process data (for example, computer program instructions).

In some embodiments, the memory 1303 is configured to store program code 1313 for performing the solutions of this application. The processor 1301 executes the program code 1313 stored in the memory 1303. In other words, the device 1300 implements the foregoing method embodiment by using the processor 1301 and the program code 1313 in the memory 1303.

Embodiments in this specification are described in a progressive manner. For same or similar parts in the embodiments, refer to each other. Each embodiment focuses on a difference from other embodiments.

That A refers to B means that A is the same as B or that A is a simple variant of B.

In the specification and claims in embodiments of this application, the terms "first", "second", and the like are for distinguishing between different objects, but are not intended to describe a particular order of the objects, and cannot be understood as an indication or implication of relative importance. For example, a first rate-limiting channel and a second rate-limiting channel are used to distinguish between different rate-limiting channels, but are not used to describe a particular order of the rate-limiting channels. It cannot be understood that the first rate-limiting channel is more important than the second rate-limiting channel.

In embodiments of this application, unless otherwise specified, "at least one" means one or more, and "a plurality of" means two or more.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A data packet processing method, wherein the method comprises:
when a destination address of a first data packet points to a first object, writing, by a first device, identification information into a differentiated services code point DSCP field of the first data packet, wherein the first device is a device that generates the first data packet, or the first device is a switch connected to the device that generates the first data packet;
sending, by the first device, the first data packet;
obtaining, by a second device, the first data packet, wherein the second device is a server to which the destination address of the first data packet points, or the second device is a security device that manages the server, and the server corresponds to the first object;
obtaining, by the second device, the identification information from the DSCP field of the first data packet; and
allowing or forbidding, by the second device based on the identification information, access behavior corresponding to the first data packet.

2. The method according to claim 1, wherein the writing, by a first device, identification information into a DSCP field of the first data packet comprises: writing, by the first device, the identification information into the DSCP field of the first data packet by using a hypervisor layer.

3. The method according to claim 1, wherein the writing, by a first device, identification information into a DSCP field of the first data packet comprises:
writing, by a first instance in the first device, first sub-identification information into a first field in the DSCP field, wherein the first instance is an instance corresponding to a second object; and
writing, by the hypervisor layer in the first device, second sub-identification information into a second field in the DSCP field, wherein the identification information comprises the first sub-identification information and the second sub-identification information.

4. The method according to claim 1, wherein the writing, by a first device, identification information into a DSCP field of the first data packet comprises: writing, by the first device, the identification information into the DSCP field of the first data packet by using an instance.

5. The method according to any one of claims 1 to 4, wherein before the writing, by a first device, identification information into a DSCP field of the first data packet, the method further comprises:
receiving, by the first device, a first rule sent by a third device, wherein the first rule indicates to write, when a destination address of a data packet sent by the first device points to the first object, the identification information into a DSCP field of the sent data packet; and
before the allowing or forbidding, by the second device based on the identification information, access behavior corresponding to the first data packet, the method further comprises:
receiving, by the second device, a second rule sent by the third device, wherein the second rule indicates to allow or forbid, when a DSCP field of a data packet obtained by the second device carries the identification information, access behavior corresponding to the obtained data packet.

6. A data packet processing method, wherein the method comprises:
when a destination address of a first data packet points to a first object, writing, by a first device, identification information into a differentiated services code point DSCP field of the first data packet, wherein the identification information indicates a second device to allow or forbid access behavior corresponding to the first data packet; and
sending, by the first device, the first data packet, wherein
the first device is a device that generates the first data packet, or the first device is a switch connected to the device that generates the first data packet; and the second device is a server to which the destination address of the first data packet points, or the second device is a security device that manages the server, and the server corresponds to the first object.

7. The method according to claim 6, wherein the writing, by a first device, identification information into a DSCP field of the first data packet comprises: writing, by the first device, the identification information into the DSCP field of the first data packet by using a hypervisor layer.

8. A data packet processing method, wherein the method comprises:
obtaining, by a second device, a first data packet, wherein the second device is a server to which a destination address of the first data packet points, or the second device is a security device that manages the server;
obtaining, by the second device, identification information from a differentiated services code point DSCP field of the first data packet; and
allowing or forbidding, by the second device based on the identification information, access behavior corresponding to the first data packet.

9. The method according to claim 8, wherein the first data packet is from a first device, and the identification information in the first data packet is obtained by using a hypervisor layer in the first device.

10. A data packet processing method, wherein the method comprises:
sending, by a third device, a first rule to a first device in a network, wherein the first rule indicates to write, when a destination address of a data packet sent by the first device points to a first object, identification information into a differentiated services code point DSCP field of the sent data packet, wherein the first device is a device that generates a first data packet, or the first device is a switch connected to the device that generates the first data packet; and
sending, by the third device, a second rule to a second device in the network, wherein the second rule indicates to allow or forbid, when a DSCP field of an obtained data packet carries the identification information, access behavior corresponding to the obtained data packet, wherein the second device is a server to which a destination address of the first data packet points, or the second device is a security device that manages the server, and the server corresponds to the first object.

11. The method according to claim 10, wherein the sending, by a third device, a first rule to a first device in a network comprises: sending, by the third device, the first rule to a hypervisor layer in the first device.

12. A data packet processing system, wherein the data packet processing system comprises a filling module in a first device and a sending module in the first device, and the data packet processing system further comprises an obtaining module in a second device and a processing module in the second device, wherein
the filling module is configured to: when a destination address of a first data packet points to a first object, write identification information into a differentiated services code point DSCP field of the first data packet, wherein the first device is a device that generates the first data packet, or the first device is a switch connected to the device that generates the first data packet;
the sending module is configured to send the first data packet;
the obtaining module is configured to obtain the first data packet, wherein the second device is a server to which the destination address of the first data packet points, or the second device is a security device that manages the server, and the server corresponds to the first object;
the obtaining module is further configured to obtain the identification information from the DSCP field of the first data packet; and
the processing module is configured to: allow or forbid, based on the identification information, access behavior corresponding to the first data packet.

13. The system according to claim 12, wherein
the filling module is specifically configured to write the identification information into the DSCP field of the first data packet by using a hypervisor layer.

14. The system according to claim 12, wherein the filling module is specifically configured to:
write first sub-identification information into a first field in the DSCP field by using a first instance, wherein the first instance is an instance corresponding to a second object; and
write second sub-identification information into a second field in the DSCP field by using a hypervisor layer, wherein the identification information comprises the first sub-identification information and the second sub-identification information.

15. The system according to claim 12, wherein
the filling module is specifically configured to write the identification information into the DSCP field of the first data packet by using an instance.

16. The system according to any one of claims 12 to 15, wherein
the data packet processing system further comprises: a first receiving module in the first device, configured to receive a first rule sent by a third device, wherein the first rule indicates to write, when a destination address of a sent data packet points to the first object, the identification information into a DSCP field of the sent data packet; and
the data packet processing system further comprises: a second receiving module in the second device, configured to receive a second rule sent by the third device, wherein the second rule indicates to allow or forbid, when a DSCP field of an obtained data packet carries the identification information, access behavior corresponding to the obtained data packet.

17. A data packet processing apparatus, wherein the apparatus is used in a first device, and the apparatus comprises:
a filling module, configured to: when a destination address of a first data packet points to a first object, write identification information into a differentiated services code point DSCP field of the first data packet, wherein the identification information indicates a second device to allow or forbid access behavior corresponding to the first data packet; and
a sending module, configured to send the first data packet, wherein
the first device is a device that generates the first data packet, or the first device is a switch connected to the device that generates the first data packet; and the second device is a server to which the destination address of the first data packet points, or the second device is a security device that manages the server, and the server corresponds to the first object.

18. The apparatus according to claim 17, wherein
the filling module is specifically configured to write the identification information into the DSCP field of the first data packet by using a hypervisor layer.

19. A data packet processing apparatus, wherein the apparatus is used in a second device, and the apparatus comprises:
an obtaining module, configured to obtain a first data packet, wherein the second device is a server to which a destination address of the first data packet points, or the second device is a security device that manages the server, wherein
the obtaining module is further configured to obtain identification information from a differentiated services code point DSCP field of the first data packet; and
a processing module, configured to: allow or forbid, based on the identification information, access behavior corresponding to the first data packet.

20. The apparatus according to claim 19, wherein the first data packet is from a first device, and the identification information in the first data packet is obtained by using a hypervisor layer in the first device.

21. A data packet processing apparatus, wherein the apparatus is used in a third device, and the apparatus comprises:
a sending module, configured to send a first rule to a first device in a network, wherein the first rule indicates to write, when a destination address of a data packet sent by the first device points to a first object, identification information into a differentiated services code point DSCP field of the sent data packet, wherein the first device is a device that generates the first data packet, or the first device is a switch connected to the device that generates the first data packet, wherein
the sending module is further configured to send a second rule to a second device in the network, wherein the second rule indicates to allow or forbid, when a DSCP field of an obtained data packet carries the identification information, access behavior corresponding to the obtained data packet, wherein the second device is a server to which a destination address of the first data packet points, or the second device is a security device that manages the server, and the server corresponds to the first object.

22. The apparatus according to claim 21, wherein
the sending module is specifically configured to send the first rule to a hypervisor layer in the first device.

23. A device, comprising a processor and a memory, wherein the memory is configured to store program code, and the processor is configured to invoke the program code in the memory, to enable the device to perform the method according to any one of claims 1 to 11.

24. A computer-readable storage medium, storing instructions, wherein when the instructions are run on a computer, the computer is enabled to perform the method according to any one of claims 1 to 11.

25. A computer program product, comprising program code, wherein when a computer runs the computer program product, the computer is enabled to perform the method according to any one of claims 1 to 11.
